# EUROPÄISCHE PATENTSCHRIFT

(11) **EP 0 937 983 B1**
(45) Veröffentlichungstag und Bekanntmachung des Hinweises auf die Patenterteilung: **16.06.2004**
(21) Anmeldenummer: 99201191.6
(22) Anmeldetag: 31.03.1993
(51) Int. Cl.: G01N 35/00, B01L 9/00, B65G 1/04

(54) **Automatisches Analysengerät**
Automatic analyser
Analyseur automatique

(30) Priorität: 09.04.1992 CH 116592
(43) Veröffentlichungstag der Anmeldung: 25.08.1999
(62) Teilanmeldung aus: 93105322.7
(73) Patentinhaber: F. HOFFMANN-LA ROCHE AG, 4070 Basle (CH)
(72) Erfinder: Koch, Bruno, 6312 Steinhausen (CH); Schacher, Gottlieb, 6006 Luzern (CH)
(74) Vertreter: Ventocilla, Abraham

(56) Entgegenhaltungen:
- EP-A- 0 192 968
- EP-A- 0 223 002
- EP-A- 0 252 471
- WO-A-80/00690
- DE-A- 3 016 605
- US-A- 4 338 279
- US-A- 5 031 797
- PATENT ABSTRACTS OF JAPAN vol. 016, no. 251 (P-1366), 8. Juni 1992 & JP 04 058157 A (FUJIREBIO INC), 25. Februar 1992
- PATENT ABSTRACTS OF JAPAN vol. 12, no. 48 (P-666), 13. Februar 1988 & JP 62 195560 A (NIPPON TECTRON CO LTD), 28. August 1987
- PATENT ABSTRACTS OF JAPAN vol. 10, no. 264 (P-495) [2320], 9. September 1986 & JP 61 088159 A (OLYMPUS OPTICAL CO LTD), 6. Mai 1986

## Beschreibung

Die Erfindung betrifft ein automatisches Analysengerät, das eine Vielzahl gleichartiger Reagenzien-Kits aufnehmen kann, wobei jeder Reagenzien-Kit mehrere Reagenzbehälter enthält.

In automatischen Analysengeräten ist eine vollautomatische Behandlung von Reagenzien- Kits erwünscht, d.h. zur Verwendung der Reagenzien-Kits sollten keine manuell durchgeführte Handlungen notwendig sein. Die Lösung dieser Aufgabe wird dadurch erschwert, dass die Reagenzbehälter vor deren ersten Benutzung im Analysengerät und zwischen Pipettiervorgängen mit einem Verschluss verschlossen sein sollten, um Reagenzverluste bzw. eine zu kurze Brauchbarkeitsdauer der Reagenzien zu vermeiden.

In automatischen Analysengeräten, in dem eine Vielzahl von Reagenzbehältern mit verschiedenen Reagenzien und eine Vielzahl von Reaktionsgefässen mit verschiedenen Proben vorhanden sind, ist ferner erwünscht, dass die Pipettiervorrichtung einen frei gewählten Zugang ("random access")zu einem beliebigen Reagenzbehälter bzw. zu einem beliebigen Reaktionsgefäss hat.

Es ist aus der U.S.-Patentschrift Nr. 4,338,279 ein automatisches Analysengerät bekannt, das eine Reagenzienkassette enthält, in welcher mehrere Reagenzbehälter angeordnet werden. Die Reagenzienkassette wird von einem bewegbaren Halter getragen, welcher mittels einer Transporteinrichtung bewegt wird, um die einzelnen Reagenzbehälter zu einer Reagenzentnahmeposition zu bringen.

Es ist ferner aus der europäischen Patentschrift EP 0252471 A2 ein selektiver Zufuhrapparat für ein biochemisch analysierenden Apparat bekannt. Dieser Zufuhrapparat hat einen transportierenden Kanal, in welchem ein Tragetablett mit einem Teil zum Halten einer Matrix von Prüfsätzen transportiert wird. Dieser Kanal ist mit einer Vorrichtung zum Analten des Tragetabletts in einer Ladeposition ausgestattet. Der Zufuhrapparat enthält ausserdem einen Prüfsatzeinschub, in dem mehrere Arten von Gruppen von Prüfsatztabletts, die mehrere Gruppen von Prüfsatzen des gleichen Typs halten und die auf der Oberseite des Tabletts mit dem Kennzeichen des Typs des Prüfsatzes gekennzeichnet sind, und in einer Ebene auf einer im wesentlichen gleichen Höhe mit dem transportierenden Kanal angeordnet sind. Der Zufuhrapparat umfasst ferner einen x/y-Abtastmechanismus, der sowohl über dem transportierenden Kanal als auch über dem Prüfsatzeinschub angeordnet und mit einem beweglichen Abtastgestell ausgestattet ist, welches von einem Antriebsmechanismus für das x/y-Abtasten getrieben wird, und eine Eingabeeinheit zur Festlegung der Ladereihenfolge der Prüfsätze auf den Tragetabletts. Der transportierende Kanal ist mit einer Transporteinrichtung ausgestattet, die dazu dient den selektiven Zufuhrapparat mit einem Analysengerät zu verbinden.

Der Erfindung liegt daher die Aufgabe zugrunde, ein Analysengerät zur Verfügung zu stellen, mit denen die oben erwähnten Ziele erreicht werden können.

Erfindungsgemäss wird die oben erwähnten Aufgabe mit einem Analysengerät gelöst, welches die folgenden Komponenten enthält:
eine Eingabestelle zur Eingabe neuer Reagenzien-Kits und eine Ausgabestelle zur Ausgabe verbrauchter Reagenzien-Kits, eine Trägerplatte, auf der im Analysengerät aufgenommenen Reagenzien-Kits matrixartig angeordnet werden, eine Transportvorrichtung zum Transport der Reagenzien-Kits von der Eingabestelle zur Trägerplatte bzw. von der Trägerplatte zur Ausgabestelle und nach Bedarf auch zu weiteren Positionen innerhalb des Analysengerätes, und eine automatische Pipettiervorrichtung mit der die im Analysengerät erforderlichen Pipettierungen durchgeführt werden, wobei unter anderem bestimmte Reagenzvolumina aus den Reagenzbehältern entnommen und zu bestimmten Reaktionsgefässen übertragen werden, die je eine zu untersuchende Probe enthalten, wobei jeder Reagenzbehälter mit einem Verschluss geschlossen ist, der durch die Pipettiernadel der Pipettiervorrichtung durchstechbar ist,
wobei die Pipettiervorrichtung entsprechend Anspruch 1 ausgestaltet ist.

Die wesentlichen Vorteile des erfindungsgemässen Analysengerätes sind wie folgt:
Das erfindungsgemässe Analysengerät ermöglicht eine vollautomatische Behandlung der Reagenzien-Kits. Dadurch wird einerseits der Bedarf nach Arbeitsaufwand für die Bedienung des Analysengerätes verringert, andererseits die Zuverlässigkeit bei der Durchführung einer grossen Zahl verschiedener Untersuchungen erhöht, für deren Durchführung eine entsprechend grosse Zahl verschiedener Reagenzien bzw. Reagenzienkombinationen erforderlich ist.

Eine bevorzugte Ausführungsform des erfindungsgemässen Analysengerätes enthält eine Einrichtung, mit der die Unversehrtheit der in das Analysengerät aufgenommenen Reagenzien-Kits geprüft werden kann. Dadurch wird verhindert, dass bereits benutzte, verbrauchte oder aus einem anderen Grund nicht einwandfreie Reagenzien-Kits in das Analysengerät aufgenommen werden.

Eine weitere bevorzugte Ausführungsform des erfindungsgemässen Analysengerätes enthält ferner eine Bearbeitungsstation, in der eine Schwenkbewegung eines dort angeordneten Reagenzien-Kits durchführbar ist. Dadurch wird z.B. ermöglicht, eine vollständige Auflösung eines Reagenzes zu erreichen, das sich ursprünglich in einem Reagenzbehälter in lyophilisierter Form, in Form eines Granulats oder als trockenes Pulver befindet.

Eine weitere bevorzugte Ausführungsform des erfindungsgemässen Analysengerätes enthält ferner eine Lesevorrichtung zum Lesen maschinenlesbarer Information, die von einer Etikette getragen wird, die auf jedem Reagenzien-Kit angebracht ist. Dadurch wird eine automatische Erfassung der relevanten Daten der Reagenzien-Kits ermöglicht.

Ein Ausführungsbeispiel der Erfindung wird im folgenden anhand der beiliegenden Zeichnungen beschrieben. Es zeigen:
Fig. 1 eine perspektivische Ansicht eines in einem erfindungsgemässen Analysengeräts verwendbaren Reagenzien-Kits 11,
Fig. 2 einen Reagenzien-Kit 11 gemäss Fig. 1 und einen Dorn 67 zur Prüfung bzw. zur Öffnung der vorgestanzten Stelle 56 des Deckels 18 des Reagenzien-Kits 11,
Fig. 3 und 4verschiedene Ansichten des Reagenzien-Kits 11 gemäss Fig. 1,
Fig. 5 einen schematischen Querschnitt des Reagenzien-Kits 11 gemäss Fig. 1,
Fig. 6eine Ansicht, teilweise im Querschnitt, eines der Verschl sse 34-36 in Fig. 5,
Fig. 7 eine Ansicht, teilweise im Querschnitt, des Deckels 81 in Fig. 6,
Fig. 8 einen Querschnitt des Stopfens 91 in Fig. 6,
Fig.9 eine Ansicht, teilweise im Querschnitt, des Verschlusses 34 gemäss Fig. 6 und eines darin eingesetzten Dorns 67,
Fig. 10 eine Ansicht, teilweise im Querschnitt, des Verschlusses 34 gemäss Fig. 6'und einer dadurch eingeführten Pipettiernadel 101, und
Fig. 11 eine perspektivische Ansicht eines erfindungsgemässen Analysengerätes,

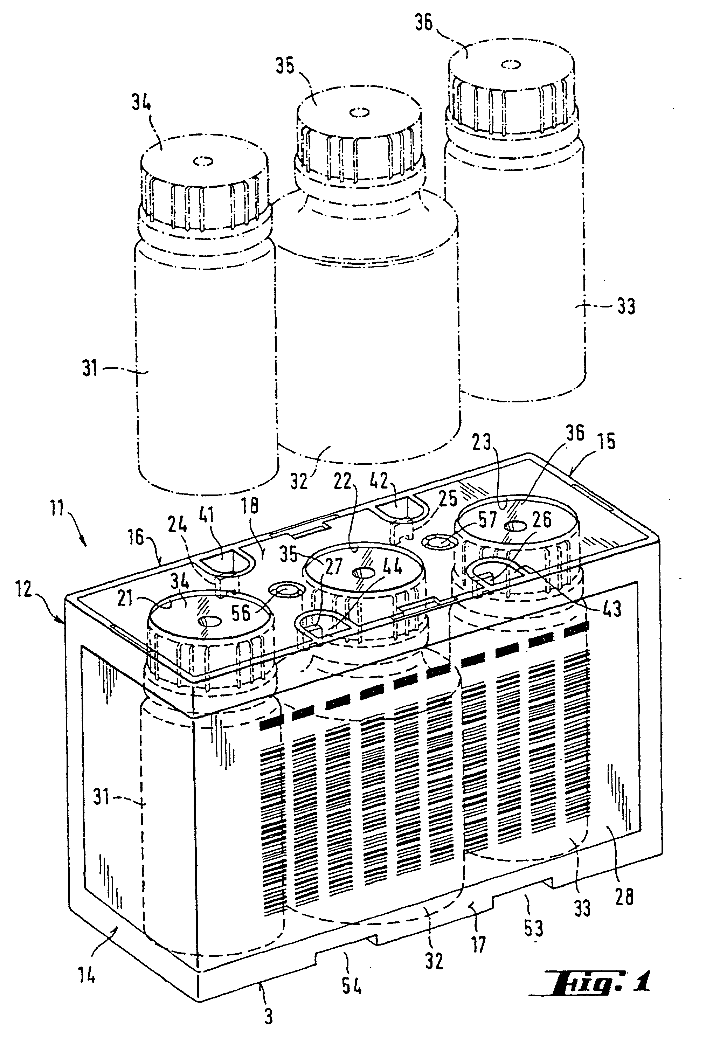

Wie in Fig. 1 dargestellt, setzt sich ein Reagenzien-Kit 11 im wesentlichen aus einem quaderförmigen Gehäuse 12 und aus Behältern 31, 32, 33 zusammen, die in dem Gehäuse 12 angeordnet werden. Das Gehäuse 12, das aus einem geeigneten Kunststoff, z.B. Polystyrol, hergestellt wird, hat einen Boden 13, Seitenwände 14, 15, 16, 17 und einen abnehmbaren Deckel 18. Der Deckel 18 weist Öffnungen 21, 22, 23 auf, durch welche die Inhalte der Reagenzbehälter 31, 32, 33 für automatisch durchgeführte Pipettiervorgänge zugänglich sind. Jeder der Reagenzbehälter ist mit einem Verschluss 34, 35, 36 geschlossen, der durch die Pipettiernadel 101 der Pipettiervorrichtung des Analysengerätes durchstechbar ist, der sich aber nach Entfernung der Pipettiernadel wieder schliesst. Die Verschlüsse 34, 35, 36 sind vorzugsweise Verschlüsse gemäss der EP-A 0 504 697 A1.

Das Gehäuse 12 kann z.B. mit folgenden Kombinationen von Reagenzbehältern bestückt werden:
- Für einen Test mit 3 Komponenten: ein Behälter mit 25 ml von einem Reagenz R1, ein Behälter mit 12,5 ml von einem Reagenz R2, und ein Behälter mit 12,5 ml von einem Referenzserum.
- Für einen Test mit 2 Komponenten: ein Behälter mit 25 ml von einem Reagenz R1, ein Behälter mit 12,5 ml vom Reagenz R1, und ein Behälter mit 12,5 ml von einem Referenzserum.
- Für einen Test mit einer Komponente: ein Behälter mit 25 ml von einem Reagenz R1 und ein oder zwei Behälter mit 12,5 ml vom Reagenz R1.

Die Reagenzbehälter 31, 32, 33 können aus Kunststoff oder aus Glas sein.

Das Gehäuse 12 hat in ihrem oberen Teil Stege 24, 25, 26, 27, die dazu geeignet sind, von einem zu einer Transportvorrichtung gehörenden Greifer 66 gegriffen zu werden.

Eine der Seitenwände des Gehäuses, z.B. Seitenwand 17 trägt eine maschinenlesbare Etikette 28.

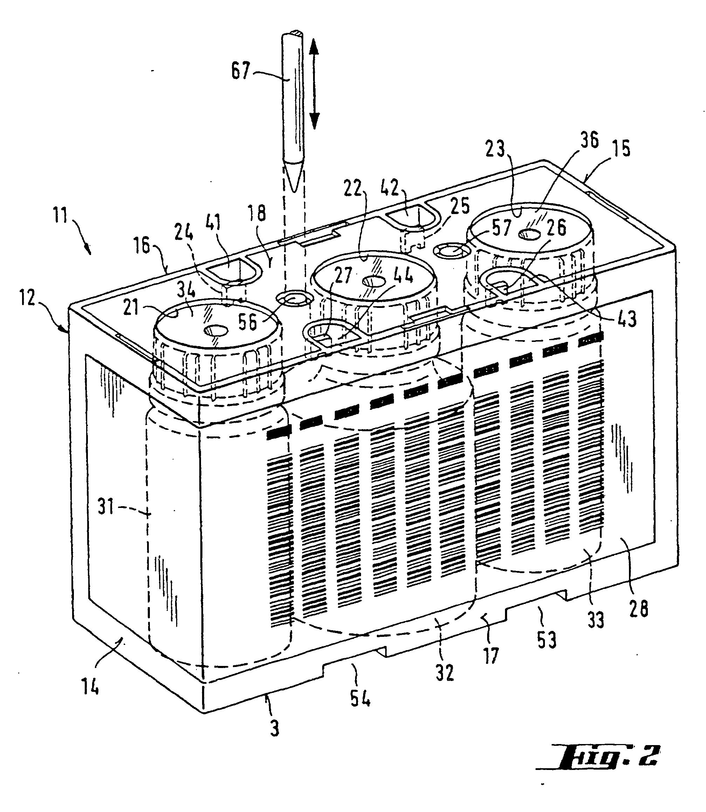

Wie aus Figuren 1 und 2 ersichtlich, hat der Deckel 18 vorgestanzte Stellen 56, 57 die mit einem Dorn 67 geöffnet werden können.

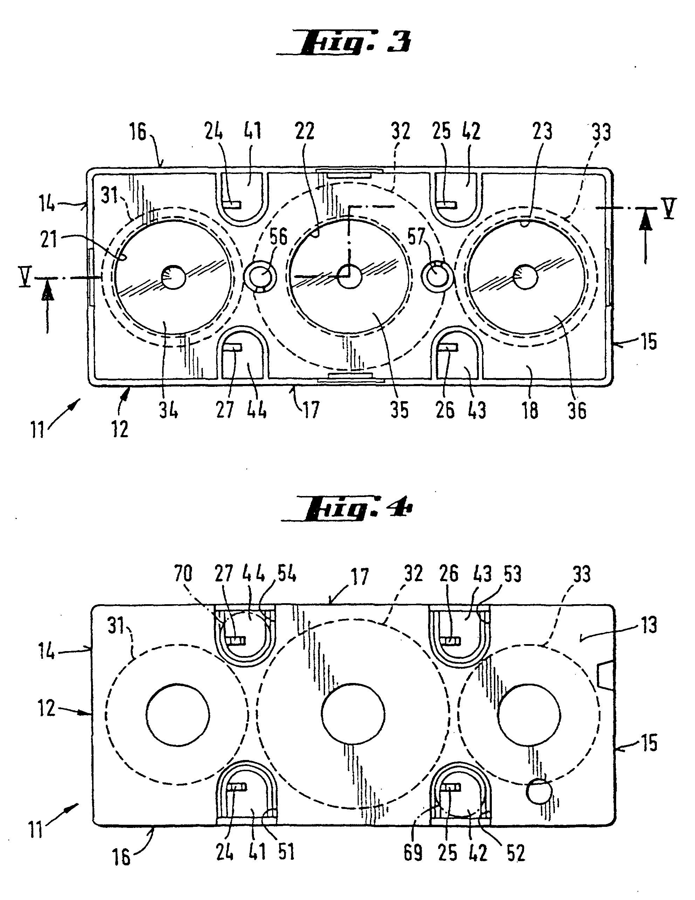

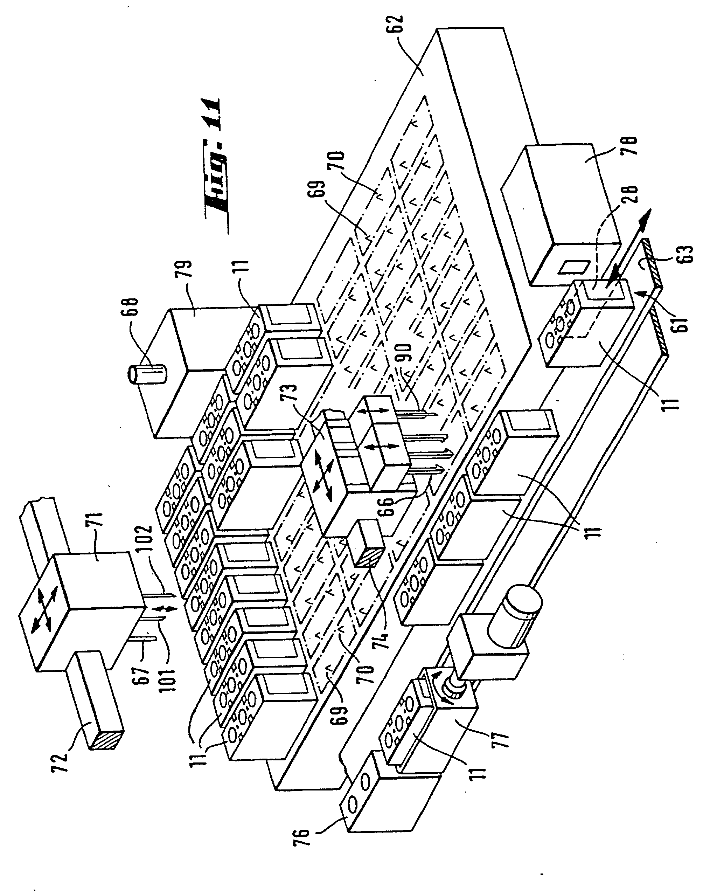

Wie aus Figuren 3-5 ersichtlich, besitzen der Boden 13 und der Deckel 18 des Gehäuses 12 einander gegenüberliegenden Öffnungen 41-44 bzw. 51-54, die Luftzirkulation durch den Innenraum des Gehäuses 12 und um die darin enthaltenen Behälter 31, 32, 33 ermöglichen. Dadurch wird eine gleichmässige Kühlung der Reagenzbehälter im Reagenzien-Kit ermöglicht (siehe nachstehender Hinweis auf die Kühlung der Trägerplatte 62 in Fig. 11).

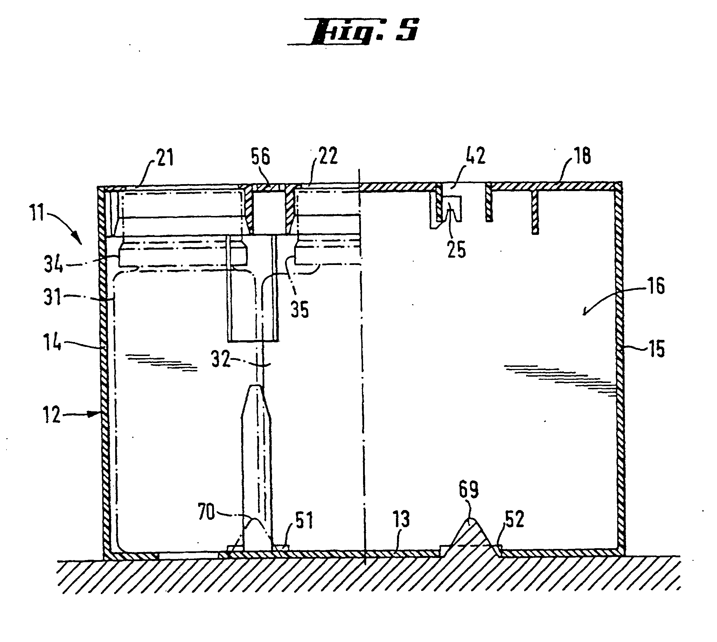

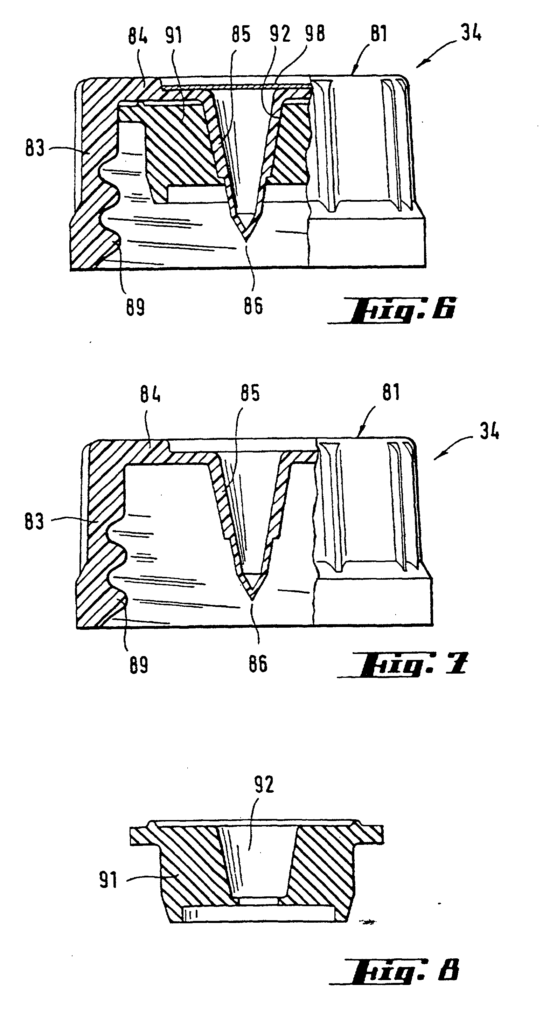

Die Verschlüsse 34-36 in Fig. 1 haben den gleichen Aufbau. Der Aufbau des Verschlusses 34 wird nachstehend anhand der Figuren 6-8 beschrieben. Wie in Fig. 6 gezeigt, setzt sich der Verschluss 34 im wesentlichen aus einem Deckel 81 gemäss Fig. 7 und einem Stopfen 91 gemäss Fig. 8, der zwischen dem Deckel 81 und dem Behälter als Abdichtung einsetzbar ist.

Der Deckel 81 gemäss Fig. 7 ist ein aus einem Kunststoff in einem Stück geformten Teil. Er hat eine zylindrische Seitenwand 83 und eine ringförmige, an der Seitenwand angrenzende obere Wand 84, die in eine kegelförmige Wand 85 übergeht, die sich vom inneren Kreis der oberen Wand nach innen erstreckt und in einer auf der Symmetrieachse der zylindrischen Wand liegenden Spitze 86 endet, die z.B. durch die Pipettiernadel einer automatischen Pipettiervorrichtung durchstechbar ist. Einen ersten, an der oberen Wand 84 angrenzenden Teil der kegelförmigen Wand 85 bildet mit der Symmetrieachse der zylindrischen Seitenwand 83 einen 10° Winkel. Die kegelförmige Wand 85 hat einen zweiten Teil, der die Spitze 86 der kegelförmigen Wand bildet, und der mit der Symmetrieachse der zylindrischen Seitenwand 83 einen 30° Winkel bildet.

Der Deckel 81 ist ein Schraubverschluss, der in seiner Seitenwand 83 ein Innengewinde 89 hat, der einem Aussengewinde im Hals des (nicht gezeigten) Reagenzbehälters entspricht, der mit dem Verschluss 34 verschlossen wird.

Der Zugang zur kegelförmigen Wand 85 ist vorzugsweise mit einer metallischen Siegelfolie 98 abgedichtet.

Der Stopfen 91 gemäss Fig. 8 hat in der Mitte einen Durchgang 92, dessen Form der Aussenfläche der kegelförmigen Wand 85 des Deckels so angepasst ist, dass wenn der Behälter mit dem Stopfen 91 und dem Deckel 81 verschlossen wird, die Aussenfläche der kegelförmigen Wand 85 sich gegen die Innenwand des Durchgangs 92 des Stopfens 91 abdichtend anlegt.

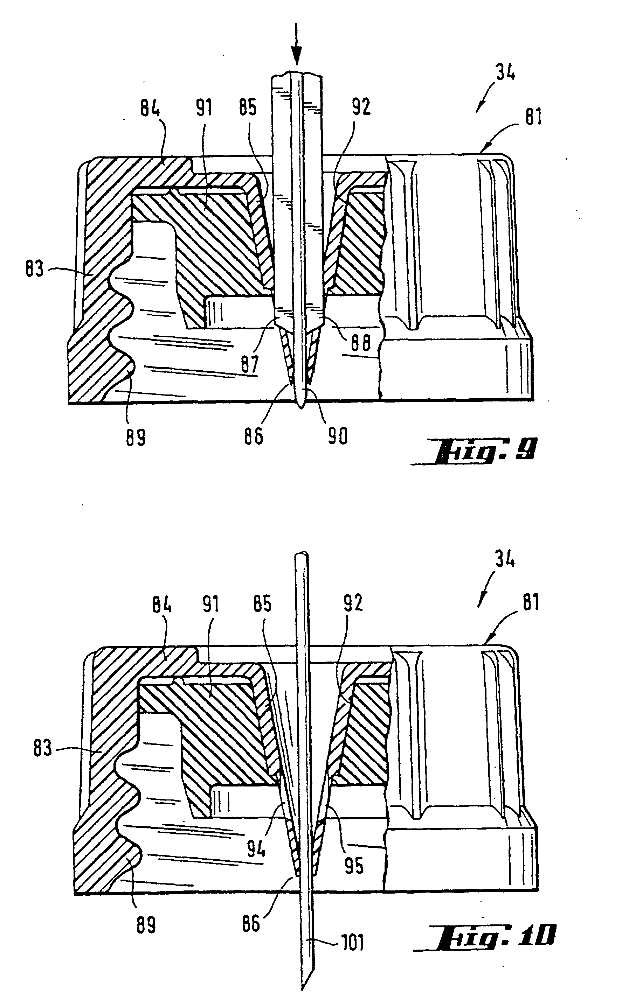

Die Benutzung des Verschlusses 34 gemäss Fig. 6 wird nachstehend anhand der Figuren 9 und 10 beschrieben.

Wie in Fig. 9 gezeigt wird die Spitze 86 der kegelförmigen Wand 85 mit der Spitze eines Dorns 90 durchgestochen, der Schneideflügel 87, 88 hat. Dabei schneiden die unteren scharfen Kanten der Schneideflügel 87, 88 in den unteren Teil der kegelförmigen Wand 85 ein. Nach Entfernung des Dorns 90 weist die kegelförmige Wand 85 Schlitze 94,95 zur Entlüftung auf.

Wie in Fig. 10 gezeigt, kann nun eine Pipettiernadel durch die von dem Dorn 90 hinterlassene zentrale Öffnung an der Spitze 86 der kegelförmigen Wand 85 in den Reagenzbehälter eingeführt werden, z.B. um ein bestimmtes Volumen eines dort enthaltenen flüssigen Reagenz zu entnehmen.

Wie anhand der Fig. 11 nachstehend beschrieben, ist ein erfindungsgemässes automatisches Analysengerät dazu geeignet, eine Vielzahl der oben beschriebenen Reagenzien-Kits 11 aufzunehmen. Wie in der Fig. 11 dargestellt, enthält ein solches Analysengerät folgende Komponenten:
- eine Eingabestelle 61 zur Eingabe neuer Reagenzien-Kits 11,
- eine Ausgabestelle 61 zur Ausgabe verbrauchter Reagenzien-Kits 11,
- eine Trägerplatte 62, auf der im Analysengerät aufgenommenen Reagenzien-Kits 11 matrixartig angeordnet werden, wobei Vorsprünge 69,70 zur genauen Positionierung vorgesehen sind,
- eine Transportvorrichtung zum Transport der Reagenzien-Kits 11 von der Eingabestelle zur Trägerplatte 62 bzw. von der Trägerplatte zur Ausgabestelle und nach Bedarf auch zu weiteren Positionen innerhalb des Analysengerätes, und
- eine automatische Pipettiervorrichtung mit der die im Analysengerät erforderlichen Pipettierungen durchgeführt werden.

Eine zentrale, in der Fig. 11 nicht gezeigten Steuereinrichtung steuert sämtliche Funktionen im Analysengerät.

Die Trägerplatte 62 wird mit einer nicht gezeigten Kühlvorrichtung gekühlt. Auf diese Weise und durch die oben erwähnte Luftzirkulation durch die Gehäuse 12 der Reagenzien-Kits wird eine gleichmässige Kühlung der darin enthaltenen Reagenzien erreicht.

Im Ausführungsbeispiel gemäss Fig. 11 wird die gleiche Stelle 61 sowohl als Eingabestelle als auch als Ausgabestelle verwendet. In diesem Fall ist zur Information der Bedienungsperson eine Anzeige des Status der Stelle 61 erforderlich, die angibt, ob die Stelle für die Eingabe von Reagenzien-Kits frei ist, oder ob sie besetzt ist. Getrennte Ein- bzw. Ausgabestellen sind jedoch auch möglich.

An der Eingabestelle 61 können bis 5 Reagenzien-Kits gleichzeitig eingegeben werden. Aufgebrauchte Reagenzien-Kits werden automatisch zur Ausgabestelle zurückgebracht und dort ausgegeben.

Wie aus Fig. 11 ersichtlich, enthält das Analysengerät eine an der Eingabestelle 61 angeordnete Lesevorrichtung 78 zum Lesen maschinenlesbarer Information, z.B. in Form eines Strichkodes, die von einer Etikette 28 getragen wird, die auf die Seite 17 des Reagenzien-Kits 11 angebracht ist. Die Information auf der Etikette 28 wird beim Einschieben des Reagenzien-Kits in die Eingabestelle durch die Lesevorrichtung 78 automatisch gelesen. Die von der Etikette in maschinenlesbarer Form getragene Information enthält die Identifikation des mit dem Reagenzien-Kit durchführbaren Tests und lotabhängigen Parameter.

Die Transportvorrichtung zum Transport der Reagenzien-Kits 11 enthält insbesondere ein Förderband 63 und einen Greifer 66, der vom Transportwagen 73 der Pipettiernadel einer automatischen Pipettiereinrichtung eines Analysengeräts geführt wird. Der Transportwagen 73 trägt neben dem Greifer 66 zwei Pipettiernadeln (diese werden aber der Uebersichtlichkeit halber in Fig. 11 nicht gezeigt) und beispielsweise einen Dorn 90 zum Bearbeiten der Wand 85.

Der Transportwagen 73 und eine Stange 74, auf die der Wagen 73 fährt, gehören zur Transporteinrichtung einer automatischen Pipettiereinrichtung des Analysengeräts. Diese Transporteinrichtung dient hauptsächlich dazu, die Pipettiernadel entlang drei zueinander senkrechten Richtungen, zu einer Vielzahl von Pipettierpositionen zu bringen.

In einer bevorzugter Ausführungsform gemäss Fig. 11 ist eine zweite automatischen Pipettiereinrichtung vorgesehen, die ebenfalls eine Transporteinrichtung für Pipettiernadel 101, 102 enthält. Diese Transporteinrichtung enthält einen Transportwagen 71 und eine Stange 72, auf die der Wagen 71 fährt. Der Transportwagen 71 trägt neben der Pipettiernadel 101, 102 einen Dorn 67, der, wie nachstehend beschrieben, zur Entwertung neuer Reagenzien-Kits im Analysengerät bzw. zur Prüfung des Zustands der dem Analysensystem zugeführten Reagenzien-Kits verwendet wird.

Bei den soeben erwähnten Pipettierungen werden unter anderem bestimmte Reagenzvolumina aus den Reagenzbehältern 31, 32, 33 entnommen und zu bestimmten Reaktionsgefässen 68 übertragen, die je eine zu untersuchende Probe enthalten. Während seiner ganzen Benutzungsdauer im Analysengerät ist jeder der Reagenzbehälter 31, 32, 33 mit einem Verschluss 34, 35 bzw. 36 geschlossen, der durch die Pipettiernadeln 101,102 der Pipettiervorrichtung durchstechbar ist.

Eine bevorzugte Ausführungsform des erfindungsgemässen Analysengerätes enthält eine Einrichtung, mit der die Unversehrtheit der in das Analysengerät aufgenommenen Reagenzien-Kits 11 geprüft werden kann. Diese Prüfeinrichtung besteht im wesentlichen aus dem in Fig. 11 dargestellten Dorn 67, der vom Transportwagen 71 der Pipettiernadel 101, 102 getragen wird, und der mit einer nicht gezeigten Fühleinrichtung zusammenwirkt. Zur Prüfung der Unversehrtheit eines Reagenzien-Kits 11 wird der Dorn 67 von einem geeigneten Antrieb gegen eine der vorgestanzten Stellen 56, 57 im Deckel des Reagenzien-Kits 11 geführt. Trifft der Dorn 67 diese Stelle geschlossen, wird dies als Bestätigung der Unversehrtheit des Reagenzien-Kits 11 erfasst. Daraufhin wird diese Stelle durch einen geeigneten, mit dem Dorn ausgeübten Druck geöffnet, um den Reagenzien-Kit zu entwerten. Trifft der Dorn hingegen die vorgestanzte Stelle offen, wird dies als Kennzeichen eines Reagenzien- Kits erfasst, der bereits entwertet ist, und deshalb nicht verwendet werden sollte. Ist dies der Fall, wird der Reagenzien-Kit von der Transportvorrichtung zur Ausgabestelle gebracht.

Wie aus Fig. 11 ersichtlich, enthält das Analysengerät eine Bearbeitungsstation 77, in der eine Schwenkbewegung oder eine rollartige Bewegung eines dort angeordneten Reagenzien-Kits durchführbar ist. Zu dieser Bearbeitungsstation wird ein Reagenzien-Kit vor seinem erstmaligen Gebrauch automatisch gebracht, wenn er einen Reagenzbehälter mit einem Reagenz in lyophilisierter Form enthält. Ein solcher Behälter wird vorher durch einen Pipettiervorgang mit einer geeigneten Menge Wasser gefüllt. Anschliessend wird der Reagenzien-Kit, der einen solchen Behälter enthält, durch den von der Transportvorrichtung bewegten Greifer 66 von seiner Position auf der Trägerplatte 62 zur Bearbeitungsstation 77 gebracht. Durch Schwenkbewegungen des Reagenzien-Kits 11 während ca. 10 Minuten wird dort eine wirksame Mischung und dadurch eine vollständige Auflösung der zu lösenden Reagenzien erzielt.

Alle in einem Reagenzien-Kit enthaltenen Reagenzien werden im gleichen Zeitraum aufgelöst. Nach der Auflösung der Reagenzien eines Reagenzien-Kits 11 in der Bearbeitungsstation 77 wird der Reagenzien-Kit zurück zu seiner Position auf der Trägerplatte 62 gebracht.

Nach Bedarf kann auch über die Steuerorgane des Analysengerätes veranlasst werden, dass bestimmte Reagenzien-Kits periodisch zum Nachmischen zur Bearbeitungsstation 77 gebracht werden, z.B. täglich.

Nach der soeben beschriebenen Auflösung von Reagenzien in lyophilisierter Form findet die oben erwähnte Entwertung des Reagenzien-Kits statt. Bei Reagenzien-Kits, die nur flüssige Reagenzien enthalten und deshalb keines Auflösungsvorgangs bedürfen, findet im entsprechenden Zeitpunkt der Behandlung des Reagenzien-Kits nur das Entwerten desselben statt.

Neben der Bearbeitungsstation 77 befindet sich eine Waschstation 76 für die Pipettiernadeln.

Während des Betriebes des Analysengeräts werden wahlweise Reagenzvolumina aus einem der auf der Trägerplatte 62 vorhandene Reagenzien-Kits 11 entnommen und einem Reaktionsgefäss 68 in einer Bearbeitungsstation 79 für Probe-Reagenz-Gemische zugeführt.

## Patentansprüche

1. Automatisches Analysengerät, das eine Vielzahl gleichartiger Reagenzien-Kits (11) aufnehmen kann, wobei jeder Reagenzien-Kit mehrere Reagenzbehälter enthält, und wobei das Analysengerät folgende Komponenten enthält:
eine Eingabestelle (61) zur Eingabe neuer Reagenzien-Kits (11) und eine Ausgabestelle (61) zur Ausgabe verbrauchter Reagenzien-Kits,
eine Trägerplatte (62), auf der im Analysengerät aufgenommenen Reagenzien-Kits (11) matrixartig angeordnet werden,
eine Transportvorrichtung (63-66) zum Transport der Reagenzien-Kits (11) von der Eingabestelle zur Trägerplatte (62) bzw. von der Trägerplatte zur Ausgabestelle und nach Bedarf auch zu weiteren Positionen innerhalb des Analysengerätes, und eine automatische Pipettiervorrichtung
mit der die im Analysengerät erforderlichen Pipettierungen durchgeführt werden, wobei unter anderem bestimmte Reagenzvolumina aus den Reagenzbehältern entnommen und zu bestimmten Reaktionsgefässen (68) übertragen werden, die je eine zu untersuchende Probe enthalten, wobei jeder Reagenzbehälter (31-33) mit einem Verschluss (34-36) geschlossen ist, der durch die Pipettiernadel (101) der Pipettiervorrichtung durchstechbar ist,
und wobei die Pipettiervorrichtung eine Pipettiernadel und eine Transportvorrichtung für die Pipettiernadel enthält, welche dazu dient, die Pipettiernadel zu einer Vielzahl von Pipettierpositionen zu bringen.

2. Automatisches Analysengerät gemäss Anspruch 1, **dadurch gekennzeichnet, dass** es eine Einrichtung enthält, mit der die Unversehrtheit der in das Analysengerät aufgenommenen Reagenzien-Kits geprüft werden kann.

3. Automatisches Analysengerät gemäss Anspruch 1, **dadurch gekennzeichnet, dass** es eine Bearbeitungsstation enthält, in der eine Schwenkbewegung oder eine rollartigen Bewegung eines dort angeordneten Reagenzien-Kits durchführbar ist.

4. Automatisches Analysengerät gemäss Anspruch 1, **dadurch gekennzeichnet, dass** es eine Lesevorrichtung zum Lesen maschinenlesbarer Information enthält, die von einer Etikette getragen wird, die auf jedem Reagenzien-Kit angebracht ist.

5. Automatisches Analysengerät gemäss Anspruch 1, **dadurch gekennzeichnet, dass** jeder Reagenzien-Kit (11) sich im wesentlichen aus einem quaderförmigen Gehäuse (12), das einen Boden (13), Seitenwände (14, 15, 16, 17) und einen abnehmbaren Deckel (18) hat, und in dem Gehäuse (12) enthaltenen Behältern (31, 32, 33) zusammensetzt, wobei der Deckel (18) Öffnungen (21, 22, 23) aufweist, durch die die Inhalte der Reagenzbehälter (31, 32, 33) für automatisch durchgeführte Pipettiervorgänge zugänglich sind, und wobei die durchstechbare Stelle des Verschlusses sich nach Entfernung der Pipettiernadel wiederschliesst.

6. Automatisches Analysengerät gemäss Anspruch 5, **dadurch gekennzeichnet, dass** das Gehäuse (12) in ihrem oberen Teil Stege (24, 25, 26, 27) hat, die dazu geeignet sind, von einem zu einer Transportvorrichtung gehörenden Greifer (66) gegriffen zu werden.

7. Automatisches Analysengerät gemäss Anspruch 5, **dadurch gekennzeichnet, dass** eine der Seitenwände (14, 15, 16, 17) des Gehäuses (12) eine maschinenlesbare Etikette (28) trägt.

8. Automatisches Analysengerät gemäss Anspruch 5, **dadurch gekennzeichnet, dass** der Deckel (18) vorgestanzte Stellen (56, 57) hat, die mit einem Dorn (67) geöffnet werden können.

9. Automatisches Analysengerät gemäss Anspruch 5, **dadurch gekennzeichnet, dass** der Boden (13) und der Deckel (18) des Gehäuses (12) einander gegenüberliegenden Öffnungen (41-44, bzw. 51-54) besitzen, die Luftzirkulation durch das Gehäuse (12) und um die darin enthaltenen Behälter (31, 32, 33) ermöglichen.

## Claims

1. An automatic analyser adapted to receive a plurality of identical reagent kits (11), each reagent kit containing a plurality of reagent containers, and wherein the analyser contains the following components:
an input (61) for inputting new reagent kits (11) and an output (61) for outputting used reagent kits,
a support plate (62) on which reagent kits (11) received in the analyser are disposed matrix-fashion,
a transport device (63-66) for the transport of the reagent kits (11) from the input to the support plate (62) and from the latter to the output and, as required, to other positions within the analyser, and an automatic pipetting device by means of which the pipetting operations required in the analyser are carried out, wherein inter alia specific reagent volumes are removed from the reagent containers and transferred to specific reaction vessels (68) each containing a sample for investigation, wherein each reagent container (31-33) is closed with a closure (34-36) piercable by the pipetting needle (101) of the pipetting device,
and wherein the pipetting device contains a pipetting needle and a transport device for the pipetting needle, which serves to bring the pipetting needle to a plurality of pipetting positions.

2. An automatic analyser according to claim 1, **characterised in that** it contains a device by means of which it is possible to check that the reagent kits received in the analyser are intact.

3. An automatic analyser according to claim 1, **characterised in that** it contains a processing station in which a pivoting movement or a roll-like movement of the reagent kit disposed there can be performed.

4. An automatic analyser according to claim 1, **characterised in that** it contains a reading device for reading machine-readable information on a label provided on each reagent kit.

5. An automatic analyser according to claim 1, **characterised in that** each reagent kit (11) is made up substantially of a cubic housing (12) having a base (13), side walls (14, 15, 16, 17,) and a removable lid (18), and containers (31, 32, 33) contained in the housing (12), the lid (18) having openings (21, 22, 23) through which the contents of the reagent containers (31, 32, 33) are accessible for automatically performed pipetting operations, and wherein the piercable point of the closure recloses after removal of the pipetting needle.

6. An automatic analyser according to claim 5, **characterised in that** the housing (12) has in its upper part webs (24, 25, 26, 27) adapted to be gripped by a gripper (66) belonging to a transport device.

7. An automatic analyser according to claim 5, **characterised in that** it carries a machine-readable label (28) on one of the side walls (14, 15, 16, 17) of the housing (12).

8. An automatic analyser according to claim 5, **characterised in that** the lid (18) has pre-stamped locations (56, 57) which can be opened with a pin (67).

9. An automatic analyser according to claim 5, **characterised in that** the base (13) and the lid (18) of the housing (12) have openings (41-44; 51-54) which are situated opposite one another and which allow air to circulate through the housing (12) and around the containers (31, 32, 33) contained therein.

## Revendications

1. Analyseur automatique qui peut loger un grand nombre de kits de réactifs (11) de même type, où chaque kit de réactif comprend plusieurs récipients de réactifs et où l'analyseur automatique comprend les composants suivants :
- un point d'entrée (61) servant à l'introduction de nouveaux kits de réactifs (11) et un point de sortie (61) servant à la sortie de kits de réactifs usagés,
- une plaque de support (62) sur laquelle sont disposés, à la façon d'une matrice, des kits de réactifs (11) logés dans l'analyseur,
- un dispositif de transport (63 - 66) servant au transport des kits de réactifs (11) depuis le point d'entrée jusqu'à la plaque de support (62) ou depuis la plaque de support jusqu'au point de sortie et, si nécessaire, également jusqu'à d'autres positions à l'intérieur de l'analyseur et,
- un dispositif automatique de prélèvement par pipette avec lequel sont effectués les prélèvements par pipette nécessaires dans l'analyseur,
où, entre autres, des volumes de réactifs déterminés sont prélevés des récipients de réactifs et transmis à des tubes à réaction (68) déterminés qui contiennent chacun un échantillon à examiner,
où chaque récipient de réactif (31 - 33) est fermé par une fermeture (34 - 36) qui peut être percée par l'aiguille de prélèvement par pipette (101) du dispositif de prélèvement par pipette, et
où le dispositif de prélèvement par pipette comprend une aiguille de prélèvement par pipette et un dispositif de transport pour l'aiguille de prélèvement par pipette, lequel dispositif de transport sert à placer l'aiguille de prélèvement par pipette sur un grand nombre de positions de prélèvements par pipette.

2. Analyseur automatique selon la revendication 1, **caractérisé en ce qu'**il comprend un dispositif avec lequel on peut contrôler l'intégrité des kits de réactifs logés dans l'analyseur.

3. Analyseur automatique selon la revendication 1, **caractérisé en ce qu'**il comprend un poste de traitement dans lequel peut être effectué un mouvement pivotant ou une sorte de mouvement roulant d'un kit de réactif disposé dans ce poste de traitement.

4. Analyseur automatique selon la revendication 1, **caractérisé en ce qu'**il comprend un dispositif de lecture servant à lire une information pouvant être lue par la machine, laquelle information a comme support une étiquette qui est appliquée sur chaque kit de réactif.

5. Analyseur automatique selon la revendication 1, **caractérisé en ce que** chaque kit de réactif (11) se compose essentiellement d'un coffret (12) en forme de parallélépipède qui comprend un fond (13), des parois latérales (14, 15, 16, 17) et un couvercle amovible (18), et de récipients (31, 32, 33) contenus dans le coffret (12) où le couvercle (18) présente des ouvertures (21, 22, 23) à travers lesquelles les contenus des récipients de réactifs (31, 32, 33) sont accessibles pour des processus de prélèvements par pipette effectués automatiquement, et où l'emplacement de la fermeture, pouvant être percé, se referme une fois que l'on a retiré l'aiguille de prélèvement par pipette.

6. Analyseur automatique selon la revendication 5, **caractérisé en ce que** le coffret (12) comprend, dans sa partie supérieure, des points d'ancrage saillants (24, 25, 26, 27) qui sont appropriés pour être saisis par un préhenseur (66) faisant partie d'un dispositif de transport.

7. Analyseur automatique selon la revendication 5, **caractérisé en ce que** l'une des parois latérales (14, 15, 16, 17) du coffret (12) comprend une étiquette (28) pouvant être lue par la machine.

8. Analyseur automatique selon la revendication 5, **caractérisé en ce que** le couvercle (18) comprend des emplacements prédécoupés (56, 57) qui peuvent être ouverts avec un poinçon (67).

9. Analyseur automatique selon la revendication 5, **caractérisé en ce que** le fond (13) et le couvercle (18) du coffret (12) comportent des ouvertures (41 - 44 ou 51 - 54) placées l'une en face de l'autre, ces ouvertures permettant une circulation d'air à travers le coffret (12) et autour des récipients (31, 32, 33) contenus à l'intérieur du coffret.
